# EUROPEAN PATENT SPECIFICATION

(11) **EP 3 010 262 B1**
(45) Date of publication and mention of the grant of the patent: **15.05.2019**
(21) Application number: 14844141.3
(22) Date of filing: 15.09.2014
(51) Int. Cl.: H04W 4/16, H04W 4/18, H04L 29/06, H04W 8/24, H04W 88/02, H04L 29/08

(54) **METHOD FOR REALIZING CELLPHONE WITHOUT CARD AND CELLPHONE**
VERFAHREN ZUR HERSTELLUNG EINES MOBILTELEFONS OHNE KARTE UND MOBILTELEFON
PROCÉDÉ DE PRODUCTION DE TÉLÉPHONE CELLULAIRE SANS CARTE ET TÉLÉPHONE CELLULAIRE

(30) Priority: 13.09.2013 CN 201310419701
(43) Date of publication of application: 20.04.2016
(73) Proprietor: Huawei Device Co., Ltd., Dongguan, Guangdong 523808 (CN)
(72) Inventor: DAI, Renjun, Shenzhen Guangdong 518129 (CN)
(74) Representative: Körber, Martin Hans
(86) International application number: PCT/CN2014/086475
(87) International publication number: WO 2015/035947

(56) References cited:
- CN-A- 101 022 576
- CN-A- 101 022 576
- CN-A- 101 917 703
- CN-A- 101 917 703
- CN-A- 101 945 376
- CN-A- 101 945 376
- CN-A- 102 523 578
- CN-A- 103 491 525
- DE-A1- 10 004 164
- YE, HUI ET AL.: 'An air card-writing method based on general mobile phones' JIANGSU COMMUNICATION no. 3, 15 June 2011, pages 61 - 63, XP008179491

## Description

### TECHNICAL FIELD

The present invention relates to the communications field, and in particular, to a method for implementing a card-free mobile phone and a card-free mobile phone.

### BACKGROUND

Currently, a mobile phone generally requires a mobile phone card, but during design of the mobile phone card, many problems arise.

From a perspective of the mobile phone, at least the following problems exist: First, a card holder for the mobile phone card occupies layout space, and even if the card holder of the mobile phone is now becoming smaller, the card holder still occupies a relatively large proportion of space in mainboard layout and appearance design. Second, a fault related to the card holder often occurs during a design process, and causes are diversified, which increases a period for product commissioning and troubleshooting. Third, both the card holder and the mobile phone card need related electronic materials.

For an operator, at least the following problems exist: Hardware costs for producing a card is required, and related operating costs caused by that a customer goes to a business office for a service also needs to be provided.

Currently, an implementation manner of a mobile phone card is generally a manner of inserting a card. The manner of inserting a card is specifically as follows: A user purchases a mobile phone card from an operator and inserts the mobile phone card into a card holder of a mobile phone, so as to obtain a mobile number, and information about the mobile number is stored in the mobile phone card and transferred depending on the mobile phone card. Because the solution has the technical problems, how a card-free mobile phone is provided to resolve the problems has become a natural demand. To resolve the problems, currently, a manner of burning a mobile number has been proposed, and the manner of burning a mobile number is specifically: burning information about a mobile number to a memory of a mobile phone, and in this way, the various problems caused by requiring a mobile phone card and a corresponding card holder may be resolved.

However, using the manner of burning a mobile number leads to binding of the mobile number to the mobile phone, and consequently, modification of the mobile number is difficult. For example, a user cannot use an original number after losing or changing a mobile phone, which leads to inflexible use.

CN 101 022 576 A describes a method for realizing air number selection, the method includes sending a service request of number selection to an air number selection management center by a user identification module, sending a number resource selection library to the user identification module by said center after the service request is received, selecting a relevant number from the number resource selection library by the user identification module and sending the selected number to said center, sending a confirmation of the selected number being opened up to the user identification module by said center after legality and completeness of data are verified.

DE 100 04 164 A1 describes a mobile phone, wherein the mobile phone has an integral identification unit which stores in the memory the SIM data for the phone and allows control of access by the network.

CN 101 917 703 A describes a communication intelligent card. The communication intelligent card comprises a communication functional module and an air card writing agent module, wherein the communication functional module can communicate with an air card writing server, and the air card writing agent module can analyze the data received by the communication functional module and write numbers on the communication intelligent card according to the data.

CN 101 945 376 A describes an air card-writing background system based on the mobile phone. The system specifically comprises an air card-writing data channel module and a card-writing request task scheduling and controlling module, wherein the air card-writing data channel module provides the uplink and downlink data communication function of the communication smart card and the air card-writing background system through data short messages.

### SUMMARY

Embodiments of the present invention provide a method for implementing a card-free mobile phone and a card-free mobile phone, which are used to provide a solution that can facilitate a change of a mobile number of a card-free mobile phone.

The invention is set out in the appended set of claims.

It can be learned from the technical solutions that the embodiments of the present invention have the following advantages: A manner of acquiring a mobile number is implemented in a manner of registering the mobile number on a server, and neither of a mobile phone card and burning of the mobile number is required, which has at least the following advantages: Layout space is reduced; costs of a card holder and a related design fault are reduced; a resource used for producing a mobile phone card is reduced; a quantity of times of visiting a business office by a user is reduced, thereby reducing operating costs.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and persons of ordinary skill in the art may still derive other drawings from these accompanying drawings without creative efforts.
FIG. 1 is a schematic flowchart of a method according to an embodiment of the present invention;
FIG. 2 is a schematic flowchart of a method according to an embodiment of the present invention;
FIG. 3 is a schematic structural diagram of a mobile phone according to an embodiment of the present invention;
FIG. 4 is a schematic structural diagram of a mobile phone according to an embodiment of the present invention;
FIG. 5 is a schematic structural diagram of a server according to an embodiment of the present invention;
FIG. 6 is a schematic structural diagram of a server according to an embodiment of the present invention;
FIG. 7 is a schematic structural diagram of a mobile phone according to an embodiment of the present invention;
FIG. 8 is a schematic structural diagram of a server according to an embodiment of the present invention; and
FIG. 9 is a schematic structural diagram of a mobile phone according to an embodiment of the present invention.

### DESCRIPTION OF EMBODIMENTS

To make the objectives, technical solutions, and advantages of the present invention clearer, the following further describes the present invention in detail with reference to the accompanying drawings. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

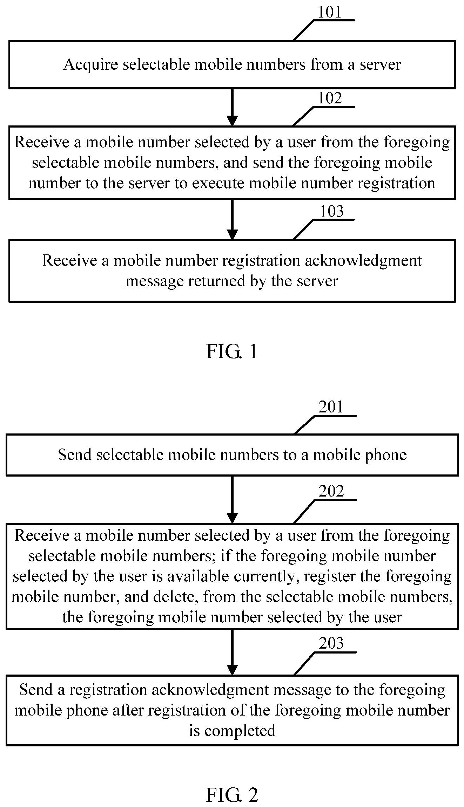

An embodiment of the present invention provides a method for implementing a card-free mobile phone, where the method is implemented on a side of a mobile phone. As shown in FIG. 1, the method includes the following steps:
101. Acquire selectable mobile numbers from a server.
102. Receive a mobile number selected by a user from the selectable mobile numbers, and send the mobile number to the server to execute mobile number registration.

In the method of this embodiment of the present invention, a specific application scenario of the steps 101 and 102 may be as follows: After purchasing a new mobile phone, a user does not need to purchase a mobile phone card; instead, by downloading an application program of a client from an official website server of an operator, the user executes the application program of the client after storing the application program of the client on the mobile phone; during an installation process of the application program of the client, the user may select, as prompted, a mobile number that can be used; at the same time, the application program of the client feeds back, to the server, the mobile number selected by the user to complete number selection and network registration for the mobile phone.

103. Receive a mobile number registration acknowledgment message returned by the server.

In addition, in step 103, when the registration acknowledgment message is returned, communication related information of an SIM (Subscriber Identity Module, subscriber identity module) card, for example, content such as information about a digital mobile phone customer, an encrypted key, and a personal address book of a user may further be returned. When the registration acknowledgment message is returned, data required for accessing a network, for example, a UIM UIM (User Identity Module, user identity module) ID (Identity, identifier) and an IMSI (International Mobile SubscriberIdentification Number, international mobile subscriber identity) may further be returned.

According to this embodiment, a manner of acquiring a mobile number is implemented in a manner of registering the mobile number on a server, and neither of a mobile phone card and burning of the mobile number is required, which has at least the following advantages: Layout space is reduced; costs of a card holder and a related design fault are reduced; a resource used for producing a mobile phone card is reduced; a quantity of times of visiting a business office by a user is reduced, thereby reducing operating costs.

Further, this embodiment of the present invention further provides a solution to implementing service item customization as follows: downloading selectable service items from the server, receiving a service item selected by the user, and sending the service item selected by the user to the server to execute service registration; and receiving a service registration acknowledgment message returned by the server.

An application scenario of the solution may be as follows: After purchasing a new mobile phone, by downloading an application program of a client from an official website server of an operator, the user executes the application program of the client after storing the application program of the client on the mobile phone; during an installation process of the application program of the client, the user may select, as prompted, a service item that can be selected; at the same time, the application program of the client feeds back, to the server, the service item selected by the user to complete service item selection and network registration for the mobile phone. The service item selected by the user may further be stored in a configuration file of the application program of the client. The configuration file may further be sent to the server for storage.

Further, this embodiment of the present invention further provides a solution to binding a mobile number to a password. The method further includes: receiving a password entered by the user, and sending the password to the server to execute binding of the password to the mobile number selected by the user.

The user may change the mobile phone after binding of the mobile number to the password is implemented, and the user enters the mobile number and the password after running the application program of the client. According to the solution, the mobile number and the password may be used to log in on multiple mobile phones. Therefore, login may further be controlled on a server side. That is, at a same time, only one mobile number is allowed to log in to a server on a mobile phone.

An application scenario of using binding of the mobile number to the password may be as follows: If the user expects to use a same number on multiple mobile phones, the user may select an existing number for installation when installing the application program of the client, and enter the existing mobile number and a service password to complete the installation. Related information about the configuration file of the application program of the client needs to be synchronized from the server, and to be modified to configuration information of the existing number.

In a process of using the mobile phone, the user needs to update a service type of a current number. The configuration file of the application program of the client may be modified, and at the same time, the related information about the configuration file may be synchronized to the server. The operator may provide a service according to modification of the related information about the configuration file. In addition, if the user changes the mobile phone, related information about a current configuration file may be synchronized to the server when a changed mobile phone is powered on to be registered with a network again, ensuring that a service configuration of a mobile number is consistent with that of the server.

This embodiment of the present invention further provides a using process that is after registration of the mobile number is completed, which may be specifically as follows: After the mobile number registration acknowledgment message returned by the server is received, the using process further includes: loading the mobile number when the mobile phone is started again; and when the user operates the service item selected by the user, using the mobile number to execute the service item operated by the user.

This embodiment of the present invention further provides an optional solution to downloading the selectable service items from the server, where the optional solution includes:
downloading an application program of a client from the server, and downloading the selectable service items by using the application program of the client; and the method further includes:
receiving a service item that is set in the configuration file of the client by the user, and synchronizing the service item that is set in the configuration file of the client to the server.

An embodiment of the present invention further provides another method for implementing a card-free mobile phone, where the method is implemented on a side of a server. As shown in FIG. 2, the method includes the following steps:
201. Send selectable mobile numbers to a mobile phone.
202. Receive a mobile number selected by a user from the selectable mobile numbers; if the mobile number selected by the user is currently available, register the mobile number, and delete, from the selectable mobile numbers, the mobile number selected by the user.

In the method of this embodiment of the present invention, a specific application scenario of the steps 201 and 202 may be as follows: After purchasing a new mobile phone, a user does not need to purchase a mobile phone card; instead, by downloading an application program of a client from an official website server of an operator, the user executes the application program of the client after storing the application program of the client on the mobile phone; during an installation process of the application program of the client, the user may select, as prompted, a mobile number that can be used; at the same time, the application program of the client feeds back, to the server, the mobile number selected by the user to complete number selection and network registration for the mobile phone.

203. Send a registration acknowledgment message to the mobile phone after registration of the mobile number is completed.

In addition, when the registration acknowledgment message is sent to the mobile phone, communication related information of an SIM (Subscriber Identity Module, subscriber identity module) card, for example, content such as information about a digital mobile phone customer, an encrypted key, and a personal address book of a user may further be returned.

According to this embodiment, a manner of acquiring a mobile number is implemented in a manner of registering the mobile number on a server, and neither of a mobile phone card and burning of the mobile number is required, which has at least the following advantages: Layout space is reduced; costs of a card holder and a related design fault are reduced; a resource used for producing a mobile phone card is reduced; a quantity of times of visiting a business office by a user is reduced, thereby reducing operating costs.

This embodiment of the present invention further provides a solution to binding a mobile phone to a password. The method further includes:
receiving a password sent by the mobile phone; and storing the mobile number selected by the user and the password, which implements binding of the mobile number to the password. In this way, convenience may be provided for various subsequent operations. For example, a mobile number is prevented from being used for login without any limitation, and security of the mobile number is improved; mutual interference caused by that a mobile number is used to log in on multiple mobile phones is prevented. A function after the password is bound to the mobile number is not limited in this embodiment of the present invention.

Further, this embodiment of the present invention further provides a solution to implementing service item customization. The method further includes the following:
sending selectable service items to the mobile phone, receiving a service item that is selected by the user and that is sent by the mobile phone, and storing a correspondence between the mobile number selected by the user and the service item selected by the user.

An application scenario of the solution may be as follows: After purchasing a new mobile phone, by downloading an application program of a client from an official website server of an operator, the user executes the application program of the client after storing the application program of the client on the mobile phone; during an installation process of the application program of the client, the user may select, as prompted, a service item that can be selected; at the same time, the application program of the client feeds back, to the server, the service item selected by the user to complete service item selection and network registration for the mobile phone. After the correspondence between the mobile number and the service item is stored in the server, control over a service permission of the mobile number may be implemented, and an operation such as billing may further be implemented. A specific function is not limited in this embodiment of the present invention.

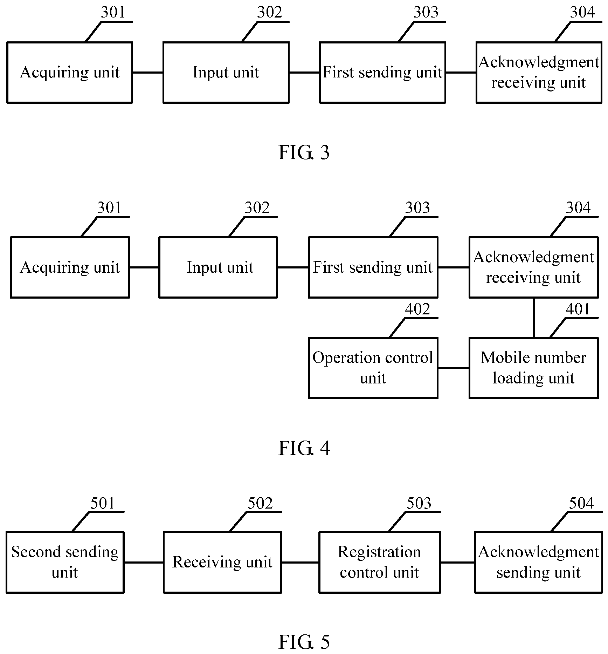

An embodiment of the present invention further provides a mobile phone, as shown in FIG. 3, including:
an acquiring unit 301, configured to acquire selectable mobile numbers from a server;
an input unit 302, configured to receive a mobile number selected by a user from the selectable mobile numbers acquired by the mobile number acquiring unit 301;
a first sending unit 303, configured to send the mobile number received by the input unit 302 to the server to execute mobile number registration; and
an acknowledgment receiving unit 304, configured to receive a mobile number registration acknowledgment message returned by the server.

In addition, when receiving the registration acknowledgment message, the acknowledgment receiving unit 304 may further receive communication related information of an SIM (Subscriber Identity Module, subscriber identity module) card, for example, content such as information about a digital mobile phone customer, an encrypted key, and a personal address book of a user.

An application scenario of this embodiment may be as follows: After purchasing a new mobile phone, a user does not need to purchase a mobile phone card; instead, by downloading an application program of a client from an official website server of an operator, the user executes the application program of the client after storing the application program of the client on the mobile phone; during an installation process of the application program of the client, the user may select, as prompted, a mobile number that can be used; at the same time, the application program of the client feeds back, to the server, the mobile number selected by the user to complete number selection and network registration for the mobile phone.

According to this embodiment, a manner of acquiring a mobile number is implemented in a manner of registering the mobile number on a server, and neither of a mobile phone card and burning of the mobile number is required, which has at least the following advantages: Layout space is reduced; costs of a card holder and a related design fault are reduced; a resource used for producing a mobile phone card is reduced; a quantity of times of visiting a business office by a user is reduced, thereby reducing operating costs.

Further, this embodiment of the present invention further provides a solution to binding a mobile number to a password. The input unit 302 is further configured to receive a password entered by the user.

The first sending unit 303 is further configured to send the password received by the input unit 302 to the server to execute binding of the password to the mobile number selected by the user.

The user may change the mobile phone after binding of the mobile number to the password is implemented, and the user enters the mobile number and the password after running the application program of the client. According to the solution, the mobile number and the password may be used to log in on multiple mobile phones. Therefore, login may further be controlled on a server side. That is, at a same time, only one mobile number is allowed to log in to a server on a mobile phone.

An application scenario of using binding of the mobile number to the password may be as follows: If the user expects to use a same number on multiple mobile phones, the user may select an existing number for installation when installing the application program of the client, and enter the existing mobile number and a service password to complete the installation. Related information about the configuration file of the application program of the client needs to be synchronized from the server, and to be modified to configuration information of the existing number.

In a process of using the mobile phone, the user needs to update a service type of a current number. The configuration file of the application program of the client may be modified, and at the same time, the related information about the configuration file may be synchronized to the server. The operator may provide a service according to modification of the related information about the configuration file. In addition, if the user changes the mobile phone, related information about a current configuration file may be synchronized to the server when a changed mobile phone is powered on to be registered with a network again, ensuring that a service configuration of a mobile number is consistent with that of the server.

Further, this embodiment of the present invention further provides a solution to implementing service item customization as follows: The acquiring unit 301 is further configured to download selectable service items from the server;
the input unit 302 is further configured to receive a service item selected by the user;
the first sending unit 303 is further configured to send the service item selected by the user to the server to execute service registration; and
the acknowledgment receiving unit 304 is further configured to receive a service registration acknowledgment message returned by the server.

An application scenario of the solution may be as follows: After purchasing a new mobile phone, by downloading an application program of a client from an official website server of an operator, the user executes the application program of the client after storing the application program of the client on the mobile phone; during an installation process of the application program of the client, the user may select, as prompted, a service item that can be selected; at the same time, the application program of the client feeds back, to the server, the service item selected by the user to complete service item selection and network registration for the mobile phone. The service item selected by the user may further be stored in a configuration file of the application program of the client. The configuration file may further be sent to the server for storage.

This embodiment of the present invention further provides a using process that is after registration of a mobile number is completed. As shown in FIG. 4, the mobile phone further includes:
a mobile number loading unit 401, configured to: after the acknowledgment receiving unit 304 receives the mobile number registration acknowledgment message returned by the server, load the mobile number when the mobile phone is started again; and
an operation control unit 402, configured to: when the user operates the service item selected by the user, use the mobile number loaded by the mobile number loading unit 401 to execute the service item operated by the user.

This embodiment of the present invention further provides an optional solution to downloading the selectable service items from the server, where the optional solution includes that: the acquiring unit 301 is specifically configured to download an application program of a client from the server, and download the selectable service items by using the application program of the client;
the input unit 302 is further configured to receive a service item that is set in the configuration file of the client by the user; and
the first sending unit 303 is further configured to synchronize the service item that is set in the configuration file of the client and received by the input unit 302 to the server.

An embodiment of the present invention further provides a server, as shown in FIG. 5, including:
a second sending unit 501, configured to send selectable mobile numbers to a mobile phone;
a receiving unit 502, configured to receive a mobile number selected by a user from the selectable mobile numbers;
a registration control unit 503, configured to: if the mobile number that is selected by the user and that is received by the receiving unit 502 is currently available, register the mobile number, and delete, from the selectable mobile numbers, the mobile number selected by the user; and
an acknowledgment sending unit 504, configured to: after the registration control unit 503 completes registration of the mobile number, send a registration acknowledgment message to the mobile phone.

In addition, when the registration acknowledgment message is sent to the mobile phone, communication related information of an SIM (Subscriber Identity Module, subscriber identity module) card, for example, content such as information about a digital mobile phone customer, an encrypted key, and a personal address book of a user may further be returned.

An application scenario of this embodiment may be as follows: After purchasing a new mobile phone, a user does not need to purchase a mobile phone card; instead, by downloading an application program of a client from an official website server of an operator, the user executes the application program of the client after storing the application program of the client on the mobile phone; during an installation process of the application program of the client, the user may select, as prompted, a mobile number that can be used; at the same time, the application program of the client feeds back, to the server, the mobile number selected by the user to complete number selection and network registration for the mobile phone.

According to this embodiment, a manner of acquiring a mobile number is implemented in a manner of registering the mobile number on a server, and neither of a mobile phone card and burning of the mobile number is required, which has at least the following advantages: Layout space is reduced; costs of a card holder and a related design fault are reduced; a resource used for producing a mobile phone card is reduced; a quantity of times of visiting a business office by a user is reduced, thereby reducing operating costs.

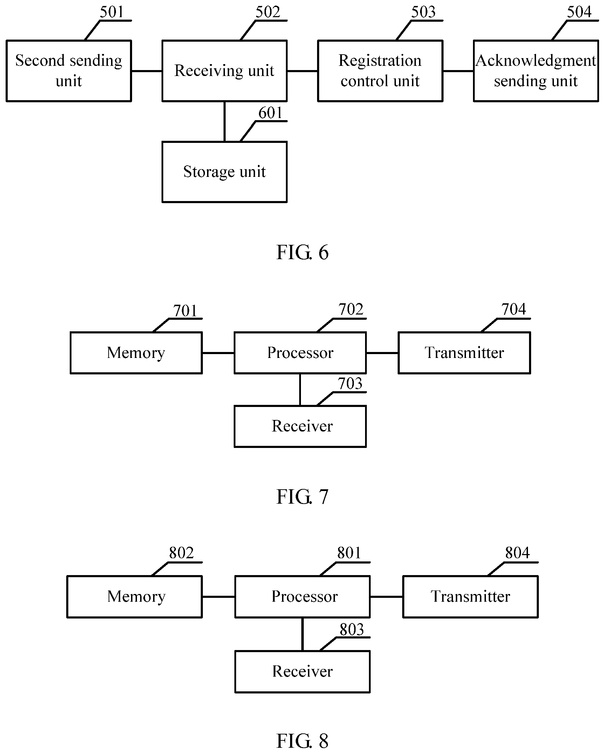

Further, this embodiment of the present invention further provides a solution to binding a mobile number to a password. As shown in FIG. 6, the receiving unit 502 is further configured to receive a password sent by the mobile phone; the server further includes:
a storage unit 601, configured to store the mobile number selected by the user and the password that are received by the receiving unit 502.

The password sent by the mobile phone is received, and the mobile number selected by the user and the password are stored, which implements binding of the mobile number to the password. In this way, convenience may be provided for various subsequent operations. For example, a mobile number is prevented from being used for login without any limitation, and security of the mobile number is improved; mutual interference caused by that a mobile number is used to log in on multiple mobile numbers is prevented. A function after the password is bound to the mobile number is not limited in this embodiment of the present invention.

Further, the second sending unit 501 is further configured to send selectable service items to the mobile phone;
the receiving unit 502 is further configured to receive a service item that is selected by the user and that is sent by the mobile phone; and
the storage unit 601 is further configured to store a correspondence between the mobile number selected by the user and the service item selected by the user.

An application scenario of the solution may be as follows: After purchasing a new mobile phone, by downloading an application program of a client from an official website server of an operator, the user executes the application program of the client after storing the application program of the client on the mobile phone; during an installation process of the application program of the client, the user may select, as prompted, a service item that can be selected; at the same time, the application program of the client feeds back, to the server, the service item selected by the user to complete service item selection and network registration for the mobile phone. After the correspondence between the mobile number and the service item is stored in the server, control over a service permission of the mobile number may be implemented, and an operation such as billing may further be implemented. A specific function is not limited in this embodiment of the present invention.

An embodiment of the present invention further provides another mobile phone, as shown in FIG. 7, including a memory 701, a processor 702, a receiver 703, and a transmitter 704.

The processor 702 is configured to: acquire selectable mobile numbers from a server by using the receiver 703; receive a mobile number selected by a user from the selectable mobile numbers, and send, by using the transmitter 704, the mobile number to the server to execute mobile number registration; and receive, by using the receiver 703, a mobile number registration acknowledgment message returned by the server.

According to this embodiment, a manner of acquiring a mobile number is implemented in a manner of registering the mobile number on a server, and neither of a mobile phone card and burning of the mobile number is required, which has at least the following advantages: Layout space is reduced; costs of a card holder and a related design fault are reduced; a resource used for producing a mobile phone card is reduced; a quantity of times of visiting a business office by a user is reduced, thereby reducing operating costs.

In addition, when receiving the registration acknowledgment message by using the receiver 703, the processor 702 may further receive communication related information of an SIM (Subscriber Identity Module, subscriber identity module) card, for example, content such as information about a digital mobile phone customer, an encrypted key, and a personal address book of a user.

An application scenario of the solution may be as follows: After purchasing a new mobile phone, by downloading an application program of a client from an official website server of an operator, the user executes the application program of the client after storing the application program of the client on the mobile phone; during an installation process of the application program of the client, the user may select, as prompted, a service item that can be selected; at the same time, the application program of the client feeds back, to the server, the service item selected by the user to complete service item selection and network registration for the mobile phone. The service item selected by the user may further be stored in a configuration file of the application program of the client. The configuration file may further be sent to the server for storage.

Further, this embodiment of the present invention further provides a solution to binding a mobile number to a password. The processor 702 is further configured to receive a password entered by the user, and send, by using the transmitter 704, the password to the server to execute binding of the password to the mobile number selected by the user.

The user may change the mobile phone after binding of the mobile number to the password is implemented, and the user enters the mobile number and the password after running the application program of the client. According to the solution, the mobile number and the password may be used to log in on multiple mobile phones. Therefore, login may further be controlled on a server side. That is, at a same time, only one mobile number is allowed to log in to a server on a mobile phone.

An application scenario of using binding of the mobile number to the password may be as follows: If the user expects to use a same number on multiple mobile phones, the user may select an existing number for installation when installing the application program of the client, and enter the existing mobile number and a service password to complete the installation. Related information about the configuration file of the application program of the client needs to be synchronized from the server, and to be modified to configuration information of the existing number.

In a process of using the mobile phone, the user needs to update a service type of a current number. The configuration file of the application program of the client may be modified, and at the same time, the related information about the configuration file may be synchronized to the server. The operator may provide a service according to modification of the related information about the configuration file. In addition, if the user changes the mobile phone, related information about a current configuration file may be synchronized to the server when a changed mobile phone is powered on to be registered with a network again, ensuring that a service configuration of a mobile number is consistent with that of the server.

Further, this embodiment of the present invention further provides a solution to implementing service item customization as follows: The processor 702 is further configured to: download selectable service items from the server by using the receiver 703; receive a service item selected by the user, and send, by using the transmitter 704, the service item selected by the user to the server to execute service registration; and receive, by using the receiver 703, a service registration acknowledgment message returned by the server.

An application scenario of the solution may be as follows: After purchasing a new mobile phone, by downloading an application program of a client from an official website server of an operator, the user executes the application program of the client after storing the application program of the client on the mobile phone; during an installation process of the application program of the client, the user may select, as prompted, a service item that can be selected; at the same time, the application program of the client feeds back, to the server, the service item selected by the user to complete service item selection and network registration for the mobile phone. The service item selected by the user may further be stored in a configuration file of the application program of the client. The configuration file may further be sent to the server for storage.

This embodiment of the present invention further provides a using process that is after registration of a mobile number is completed. The processor 702 is further configured to: after the receiver 703 receives the mobile number registration acknowledgment message returned by the server, load the mobile number when the mobile phone is started again; and when the user operates the service item selected by the user, use the mobile number to execute the service item operated by the user.

This embodiment of the present invention further provides an optional solution to downloading the selectable service items from the serverthe, specifically including: downloading an application program of a client from the server by using the receiver 703, and downloading the selectable service items by using the application program of the client; the processor 702 is further configured to receive a service item that is set in the configuration file of the client by the user, and synchronize, by using the transmitter 704, the service item that is set in the configuration file of the client to the server.

An embodiment of the present invention further provides another server, as shown in FIG. 8, including a processor 801, a memory 802, a receiver 803, and a transmitter 804.

The processor 801 is configured to: send selectable mobile numbers to a mobile phone by using the transmitter 804; receive, by using the receiver 803, a mobile number selected by a user from the selectable mobile numbers; if the mobile number selected by the user is currently available, register the mobile number, and delete, from the selectable mobile numbers, the mobile number selected by the user; and send a registration acknowledgment message to the mobile phone by using the transmitter 804 after registration of the mobile number is completed.

In addition, when the registration acknowledgment message is sent to the mobile phone, communication related information of an SIM (Subscriber Identity Module, subscriber identity module) card, for example, content such as information about a digital mobile phone customer, an encrypted key, and a personal address book of a user may further be returned.

An application scenario of this embodiment may be as follows: After purchasing a new mobile phone, a user does not need to purchase a mobile phone card; instead, by downloading an application program of a client from an official website server of an operator, the user executes the application program of the client after storing the application program of the client on the mobile phone; during an installation process of the application program of the client, the user may select, as prompted, a mobile number that can be used; at the same time, the application program of the client feeds back, to the server, the mobile number selected by the user to complete number selection and network registration for the mobile phone.

According to this embodiment, a manner of acquiring a mobile number is implemented in a manner of registering the mobile number on a server, and neither of a mobile phone card and burning of the mobile number is required, which has at least the following advantages: Layout space is reduced; costs of a card holder and a related design fault are reduced; a resource used for producing a mobile phone card is reduced; a quantity of times of visiting a business office by a user is reduced, thereby reducing operating costs.

Further, this embodiment of the present invention further provides a solution to binding a mobile number to a password. The processor 801 is further configured to receive, by using the receiver 803, a password sent by the mobile phone, and store the mobile number selected by the user and the password to the memory 802.

The password sent by the mobile phone is received, and the mobile number selected by the user and the password are stored, which implements binding of the mobile number to the password. In this way, convenience may be provided for various subsequent operations. For example, a mobile number is prevented from being used for login without any limitation, and security of the mobile number is improved; mutual interference caused by that a mobile number is used to log in on multiple mobile numbers is prevented. A function after the password is bound to the mobile number is not limited in this embodiment of the present invention.

Further, the processor 801 is further configured to: send selectable service items to the mobile phone by using the transmitter 804; receive, by using the receiver 803, a service item that is selected by the user and that is sent by the mobile phone; and store a correspondence between the mobile number selected by the user and the service item selected by the user to the memory 802.

An application scenario of the solution may be as follows: After purchasing a new mobile phone, by downloading an application program of a client from an official website server of an operator, the user executes the application program of the client after storing the application program of the client on the mobile phone; during an installation process of the application program of the client, the user may select, as prompted, a service item that can be selected; at the same time, the application program of the client feeds back, to the server, the service item selected by the user to complete service item selection and network registration for the mobile phone. After the correspondence between the mobile number and the service item is stored in the server, control over a service permission of the mobile number may be implemented, and an operation such as billing may further be implemented. A specific function is not limited in this embodiment of the present invention.

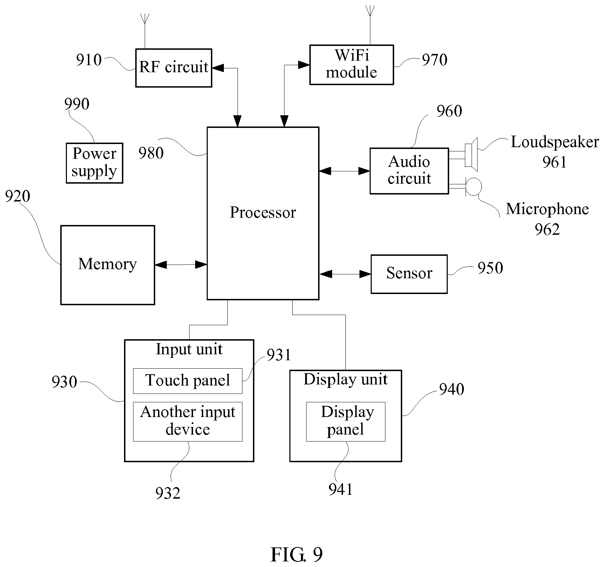

An embodiment of the present invention further provides another mobile phone, as shown in FIG. 9. For ease of description, only a part related to this embodiment of the present invention is shown. For specific technical details that are not described, refer to the method embodiments of the present invention. The terminal may be any terminal device such as a mobile phone, a tablet computer, a PDA (Personal Digital Assistant, personal digital assistant), a POS (Point of Sales, point of sales), or a vehicle-mounted computer. That the terminal is the mobile phone is used as an example.

FIG. 9 shows a block diagram of a partial structure of the mobile phone related to the terminal provided in this embodiment of the present invention. Referring to FIG. 9, the mobile phone includes parts such as an RF (Radio Frequency, radio frequency) circuit 910, a memory 920, an input unit 930, a display unit 940, a sensor 950, an audio circuit 960, a Wireless Fidelity (wireless fidelity, WiFi) module 970, a processor 980, and a power supply 990. Persons skilled in the art may understand that the structure of the mobile phone shown in FIG. 9 imposes no limitation on the mobile phone, and instead the mobile phone may include parts more or fewer than those shown in the figure, or a combination of some parts, or parts with different layouts.

The following specifically introduces the parts of the mobile phone with reference to FIG. 9:
The RF circuit 910 may be configured to: receive and send a signal in an information receiving or sending process or a communication process; and in particular, after receiving downlink information of a base station, send the downlink information to the processor 980 for processing, and in addition, send designed uplink data to the base station. Generally, the RF circuit includes but is not limited to an antenna, at least one amplifier, a transceiver, a coupler, a low noise amplifier (Low Noise Amplifier, LNA), a duplexer, and the like. In addition, the RF circuit 90 may further communicate with a network and other devices by means of wireless communications. The wireless communications may use any communication standard or protocol, which includes but is not limited to Global System for Mobile Communications (Global System of Mobile communication, GSM), general packet radio service (General Packet Radio Service, GPRS), Code Division Multiple Access (Code Division Multiple Access, CDMA), Wideband Code Division Multiple Access (Wideband Code Division Multiple Access, WCDMA), Long Term Evolution (Long Term Evolution, LTE), an email, a short message service (Short Messaging Service, SMS), and the like.

The memory 920 may be configured to store a software program and a module, and the processor 980 executes various functional applications of the mobile phone and performs data processing by running the software program and the module that are stored in the memory 920. The memory 920 may mainly include a program storage area and a data storage area, where the program storage area may store an operating system, an application program required by at least one function (such as an sound playback function or an image playback function), and the like; and the data storage area may store data (such as audio data or a phone book) created according to use of the mobile phone, and the like. In addition, the memory 920 may include a high-speed random access memory, and may further include a non-volatile memory, for example, at least one magnetic disk storage device, a flash device, or another volatile solid-state storage device.

The input unit 930 may be configured to receive input numeral or character information, and generate key signal input related to a user setting and functional control of the mobile phone. Specifically, the input unit 930 may include a touch panel 931 and another input device 932. The touch panel 931 is also referred as a touchscreen and may collect a touch operation (for example, an operation performed by the user on the touch panel 931 or near the touch panel 931 by using any proper object or accessory, such as a finger or a stylus) of the user on or near the touch panel 931, and drive a corresponding connection apparatus according to a preset program. Optionally, the touch panel 931 may include two parts: a touch detection apparatus and a touch controller. The touch detection apparatus detects a touch location of the user, detects a signal brought by the touch operation, and sends the signal to the touch controller. The touch controller receives touch information from the touch detection apparatus, converts the touch information into touch coordinates, and sends the touch coordinates to the processor 980, and can receive and execute a command sent by the processor 980. In addition, the touch panel 931 may be implemented by using multiple types such as a resistive type, a capacitive type, infrared, and a surface acoustic wave. The input unit 930 may further include another input device 932 in addition to the touch panel 931. Specifically, the another input device 932 may include but is not limited to one or more of a physical keyboard, a function key (such as a volume control key or a switch key), a trackball, a mouse, a joystick, and the like.

The display unit 940 may be configured to display information input by the user or information provided for the user and various menus of the mobile phone. The display unit 940 may include a display panel 941. Optionally, a form, such as a liquid crystal display (Liquid Crystal Display, LCD) and an organic light-emitting diode (Organic Light-Emitting Diode, OLED) may be used to configure the display panel 941. Further, the touch panel 931 may cover the display panel 941. When detecting a touch operation on or near the touch panel 931, the touch panel 931 transmits the touch operation to the processor 980 to determine a type of a touch event, and then the processor 980 provides corresponding visual output on the display panel 941 according to the type of the touch event. In FIG. 9, the touch panel 931 and the display panel 941 are used as two independent parts to implement input and input functions of the mobile phone. However, in some embodiments, the touch panel 931 and the display panel 941 may be integrated to implement the input and output functions of the mobile phone.

The mobile phone may further include at least one type of the sensor 950, such as a light sensor, a motion sensor, or another sensor. Specifically, the light sensor may include an ambient light sensor and a proximity sensor, where the ambient light sensor may adjust luminance of the display panel 941 according to light and shade of ambient light, and the proximity sensor may turn off the display panel 941 and/or backlight when the mobile phone moves to an ear. As a type of a motion sensor, an accelerometer sensor may detect a value of acceleration on each direction (generally, three axes), and at rest, detect a value and a direction of gravity, and may be used in an application that recognizes a mobile phone posture (such as screen switching between portrait and landscape modes, a related game, and magnetometer posture calibration), a function related to vibration recognition (such as a pedometer and knocking), and the like. For other sensors that may be configured on the mobile phone, such as a gyroscope, a barometer, a hygrometer, a thermometer, and an infrared ray sensor, details are not described herein again.

The audio circuit 960, a loudspeaker 961, and a microphone 962 may provide an audio interface between the user and the mobile phone. The audio circuit 960 may transmit an electrical signal converted from received audio data to the loudspeaker 961, and the loudspeaker 961 converts the electrical signal into a sound signal for output; in another aspect, the microphone 962 converts a collected sound signal into an electrical signal and the electrical signal is received by the audio circuit 960 and is converted into audio data, and the audio data is output to the processor 980 for processing and then is sent to, for example, another mobile phone, by using the RF circuit 910, or the audio data is output to the memory 920 for further processing.

WiFi belongs to a short-distance wireless transmission technology. The mobile phone may help, by using the WiFi module 970, the user to receive and send an email, browse a web page, access streaming media, and the like. The WiFi module 970 provides wireless broadband Internet access for the user. Although FIG. 9 shows the WiFi module 970, it may be understood that the WiFi module 970 is not a necessary part of the mobile phone, and may completely be omitted according to a need without changing the essence of the present invention.

The processor 980 is a control center of the mobile phone, connects to each part of the entire mobile phone by using various interfaces and lines, and performs various functions of the mobile phone and data processing by running or executing a software program and/or module stored in the memory 920 and invoking data stored in the memory 920, so as to perform overall monitoring on the mobile phone. Optionally, the processor 980 may include one or more processing units. Preferably, an application processor and a modem processor may be integrated into the processor 980, where the application processor mainly processes an operating system, a user interface, an application program, and the like, and the modem processor mainly processes wireless communications. It may be understood that the modem processor may not be integrated into the processor 980.

The mobile phone may further include the power supply 990 (such as a battery) that supplies power to the parts. Preferably, the power supply may be logically connected to the processor 980 by using a power management system, so as to implement, by using the power management system, a function such as charging, discharging, and power consumption management.

Although not shown in FIG. 9, the mobile phone may further include a camera, a Bluetooth module, and the like, which are not described in detail herein.

In this embodiment of the present invention, the processor 980 included in the terminal further has the following functions:
acquiring selectable mobile numbers from a server; receiving a mobile number selected by a user from the selectable mobile numbers, and sending the mobile number to the server to execute mobile number registration; and receiving a mobile number registration acknowledgment message returned by the server.

In addition, when receiving the registration acknowledgment message, the processor 980 may further receive communication related information of an SIM (Subscriber Identity Module, subscriber identity module) card, for example, content such as information about a digital mobile phone customer, an encrypted key, and a personal address book of a user.

An application scenario of the solution may be as follows: After purchasing a new mobile phone, by downloading an application program of a client from an official website server of an operator, the user executes the application program of the client after storing the application program of the client on the mobile phone; during an installation process of the application program of the client, the user may select, as prompted, a service item that can be selected; at the same time, the application program of the client feeds back, to the server, the service item selected by the user to complete service item selection and network registration for the mobile phone. The service item selected by the user may further be stored in a configuration file of the application program of the client. The configuration file may further be sent to the server for storage.

According to this embodiment, a manner of acquiring a mobile number is implemented in a manner of registering the mobile number on a server, and neither of a mobile phone card and burning of the mobile number is required, which has at least the following advantages: Layout space is reduced; costs of a card holder and a related design fault are reduced; a resource used for producing a mobile phone card is reduced; a quantity of times of visiting a business office by a user is reduced, thereby reducing operating costs.

Further, this embodiment of the present invention further provides a solution to binding a mobile number to a password. The processor 980 further has the following functions: receiving a password entered by the user, and sending the password to the server to execute binding of the password to the mobile number selected by the user.

The user may change the mobile phone after binding of the mobile number to the password is implemented, and the user enters the mobile number and the password after running the application program of the client. According to the solution, the mobile number and the password may be used to log in on multiple mobile phones. Therefore, login may further be controlled on a server side. That is, at a same time, only one mobile number is allowed to log in to a server on a mobile phone.

An application scenario of using binding of the mobile number to the password may be as follows: If the user expects to use a same number on multiple mobile phones, the user may select an existing number for installation when installing the application program of the client, and enter the existing mobile number and a service password to complete the installation. Related information about the configuration file of the application program of the client needs to be synchronized from the server, and to be modified to configuration information of the existing number.

In a process of using the mobile phone, the user needs to update a service type of a current number. The configuration file of the application program of the client may be modified, and at the same time, the related information about the configuration file may be synchronized to the server. The operator may provide a service according to modification of the related information about the configuration file. In addition, if the user changes the mobile phone, related information about a current configuration file may be synchronized to the server when a changed mobile phone is powered on to be registered with a network again, ensuring that a service configuration of a mobile number is consistent with that of the server.

Further, this embodiment of the present invention further provides a solution to implementing service item customization as follows: The processor 980 further has the following functions: downloading selectable service items from the server;
receiving a service item selected by the user, and sending the service item selected by the user to the server to execute service registration; and
receiving a service registration acknowledgment message returned by the server.

An application scenario of the solution may be as follows: After purchasing a new mobile phone, by downloading an application program of a client from an official website server of an operator, the user executes the application program of the client after storing the application program of the client on the mobile phone; during an installation process of the application program of the client, the user may select, as prompted, a service item that can be selected; at the same time, the application program of the client feeds back, to the server, the service item selected by the user to complete service item selection and network registration for the mobile phone. The service item selected by the user may further be stored in a configuration file of the application program of the client. The configuration file may further be sent to the server for storage.

This embodiment of the present invention further provides a using process that is after registration of a mobile number is completed. The processor 980 further has the following function: after the mobile number registration acknowledgment message returned by the server is received, the functions further include:
loading the mobile number when the mobile phone is started again; and when the user operates the service item selected by the user, using the mobile number to execute the service item operated by the user.

This embodiment of the present invention further provides an optional solution to downloading the selectable service items from the server. The processor 980 further has the following functions: The downloading selectable service items from the server includes: downloading an application program of a client from the server, and downloading the selectable service items by using the application program of the client. The solution further includes: receiving a service item that is set in the configuration file of the client by the user, and synchronizing the service item that is set in the configuration file of the client to the server.

In addition, when the registration acknowledgment message is sent to the mobile phone, communication related information of an SIM (Subscriber Identity Module, subscriber identity module) card, for example, content such as information about a digital mobile phone customer, an encrypted key, and a personal address book of a user may further be returned.

An application scenario of this embodiment may be as follows: After purchasing a new mobile phone, a user does not need to purchase a mobile phone card; instead, by downloading an application program of a client from an official website server of an operator, the user executes the application program of the client after storing the application program of the client on the mobile phone; during an installation process of the application program of the client, the user may select, as prompted, a mobile number that can be used; at the same time, the application program of the client feeds back, to the server, the mobile number selected by the user to complete number selection and network registration for the mobile phone.

It should be noted that, in the mobile phone and server embodiments, the involved units are divided merely based on function logic, but are not limited to the division, provided that corresponding functions can be implemented. In addition, specific names of the functional units are merely for facilitating differentiation from each other, but are not intended to limit the protection scope of the present invention.

In addition, persons of ordinary skill in the art may understand that all or a part of the steps of the method embodiments may be implemented by a program instructing relevant hardware. The corresponding program may be stored in a computer readable storage medium. The storage medium mentioned above may be a read-only memory, a magnetic disk, an optical disc, or the like.

The descriptions are merely exemplary specific implementation manners of the present invention, but are not intended to limit the protection scope of the present invention. Any variation or replacement readily figured out by persons skilled in the art within the technical scope disclosed in the embodiments of the present invention shall fall within the protection scope of the present invention. Therefore, the protection scope of the present invention shall be subject to the protection scope of the claims.

## Claims

1. A method performed by a card-free mobile phone for implementing a card-free mobile phone, comprising:
acquiring (101) a plurality of selectable mobile numbers from a server;
receiving (102) a mobile number selected by a user from the plurality of selectable mobile numbers, and sending (102) the selected mobile number to the server to execute mobile number registration; and
receiving (103) a mobile number registration acknowledgment message returned by the server;
wherein the method further comprises:
receiving a password entered by the user, and sending the password to the server to execute binding of the password to the mobile number selected by the user.

2. The method according to claim 1, further comprising:
downloading selectable service items from the server;
receiving a service item selected by the user, and sending the service item selected by the user to the server to execute service registration; and
receiving a service registration acknowledgment message returned by the server.

3. The method according to claim 2, after the receiving (103) a mobile number registration acknowledgment message returned by the server, further comprising:
loading the mobile number when the mobile phone is started again; and when the user operates the service item selected by the user, using the mobile number to execute the service item operated by the user.

4. The method according to claim 2 or 3, wherein the downloading selectable service items from the server comprises:
downloading an application program of a client from the server, and downloading the selectable service items by using the application program of the client; and the method further comprises:
receiving a service item that is set in a configuration file of the client by the user, and synchronizing the service item that is set in the configuration file of the client to the server.

5. A card-free mobile phone, comprising:
an acquiring unit (301), configured to acquire a plurality of selectable mobile numbers from a server;
an input unit (302), configured to receive a mobile number selected by a user from the plurality of selectable mobile numbers acquired by the acquiring unit (301);
a first sending unit (303), configured to send the selected mobile number received by the input unit (302) to the server to execute mobile number registration; and
an acknowledgment receiving unit (304), configured to receive a mobile number registration acknowledgment message returned by the server; wherein:
the input unit (302) is further configured to receive a password entered by the user; and
the first sending unit (303) is further configured to send the password received by the input unit (302) to the server to execute binding of the password to the mobile number selected by the user.

6. The card-free mobile phone according to claim 5, wherein:
the acquiring unit (301) is further configured to download selectable service items from the server;
the input unit (302) is further configured to receive a service item selected by the user;
the first sending unit (303) is further configured to send the service item selected by the user to the server to execute service registration; and
the acknowledgment receiving unit (304) is further configured to receive a service registration acknowledgment message returned by the server.

7. The card-free mobile phone according to claim 6, further comprising:
a mobile number loading unit (401), configured to: after the acknowledgment receiving unit (304) receives the mobile number registration acknowledgment message returned by the server, load the mobile number when the mobile phone is started again; and
an operation control unit (402), configured to: when the user operates the service item selected by the user, use the mobile number to execute the service item operated by the user.

8. The card-free mobile phone according to claim 6 or 7, wherein:
the acquiring unit (301) is specifically configured to download an application program of a client from the server, and download the selectable service items by using the application program of the client;
the input unit (302) is further configured to receive a service item that is set in a configuration file of the client by the user; and
the first sending unit (303) is further configured to synchronize the service item that is set in the configuration file of the client and received by the input unit (302) to the server.

9. A card-free mobile phone, comprising: a processor (702), a receiver (703), and a transmitter (704);
the processor (702), configured to acquire a plurality of selectable mobile numbers from a server by using the receiver (703), to receive a mobile number selected by a user from the plurality of selectable mobile numbers, and to send, by using the transmitter (704), the selected mobile number to the server to execute mobile number registration, and to receive, by using the receiver (703), a mobile number registration acknowledgment message returned by the server;
wherein:
the processor (702) is further configured to receive a password entered by the user, and send, by using the transmitter (704), the password to the server to execute binding of the password to the mobile number selected by the user.

10. The card-free mobile phone according to claim 9, wherein: the processor (702) is further configured to download selectable service items from the server by using the receiver (703), receive a service item selected by the user, and send, by using the transmitter (704), the service item selected by the user to the server to execute service registration, and to receive, by using the receiver (703), a service registration acknowledgment message returned by the server.

11. The card-free mobile phone according to claim 10, wherein: the processor (702) is further configured to: after the receiver (703) receives the mobile number registration acknowledgment message returned by the server, load the mobile number when the mobile phone is started again, and when the user operates the service item selected by the user, use the mobile number to execute the service item operated by the user.

12. The card-free mobile phone according to claim 10 or 11, wherein: the processor (702) is specifically configured to: download an application program of a client from the server by using the receiver (703), download the selectable service items by using the application program of the client, receive a service item that is set in a configuration file of the client by the user, and synchronize, by using the transmitter (704), the service item that is set in the configuration file of the client to the server.

## Patentansprüche

1. Verfahren, das von einem kartenlosen Mobiltelefon zum Implementieren eines kartenlosen Mobiltelefons durchgeführt wird und Folgendes umfasst:
Erfassen (101) einer Vielzahl von auswählbaren Mobiltelefonnummern von einem Server;
Empfangen (102) einer Mobiltelefonnummer, die von einem Benutzer aus der Vielzahl von auswählbaren Mobiltelefonnummern ausgewählt wurde, und Senden (102) der ausgewählten Mobiltelefonnummer an den Server, um eine Mobiltelefonnummernregistrierung auszuführen; und
Empfangen (103) einer Mobiltelefonnummernregistrierungsbestätigungsnachricht, die vom Server zurückgegeben wurde;
wobei das Verfahren ferner Folgendes umfasst:
Empfangen eines Passworts, das vom Benutzer eingegeben wurde, und Senden des Passworts an den Server, um eine Bindung des Passworts an die Mobiltelefonnummer, die vom Benutzer ausgewählt wurde, auszuführen.

2. Verfahren nach Anspruch 1, das ferner Folgendes umfasst:
Herunterladen von auswählbaren Dienstelementen vom Server;
Empfangen eines Dienstelements, das vom Benutzer ausgewählt wurde, und Senden des Dienstelements, das vom Benutzer ausgewählt wurde, an den Server, um eine Dienstregistrierung auszuführen; und
Empfangen einer Dienstregistrierungsbestätigungsnachricht, die vom Server zurückgegeben wurde.

3. Verfahren nach Anspruch 2, das nach dem Empfangen (103) einer Mobiltelefonnummernregistrierungsbestätigungsnachricht, die vom Server zurückgegeben wurde, ferner Folgendes umfasst:
Laden der Mobiltelefonnummer, wenn das Mobiltelefon erneut gestartet wird; und wenn der Benutzer das Dienstelement, das vom Benutzer ausgewählt wurde, betreibt, Verwenden der Mobiltelefonnummer, um das Dienstelement, das vom Benutzer betrieben wird, auszuwählen.

4. Verfahren nach Anspruch 2 oder 3, wobei das Herunterladen von auswählbaren Dienstelementen vom Server Folgendes umfasst:
Herunterladen eines Anwendungsprogramms eines Clients vom Server und Herunterladen der auswählbaren Dienstelemente unter Verwendung des Anwendungsprogramms des Clients und wobei das Verfahren ferner Folgendes umfasst:
Empfangen eines Dienstelements, das in einer Auslegungsdatei des Clients durch den Benutzer eingestellt wurde, und Synchronisieren des Dienstelements, das in der Auslegungsdatei des Clients eingestellt ist, mit dem Server.

5. Kartenloses Mobiltelefon, das Folgendes umfasst:
eine Erfassungseinheit (301), die dazu ausgelegt ist, eine Vielzahl von auswählbaren Mobiltelefonnummern von einem Server zu erfassen;
eine Eingabeeinheit (302), die dazu ausgelegt ist, eine Mobiltelefonnummer, die von einem Benutzer aus der Vielzahl von auswählbaren Mobiltelefonnummern ausgewählt wurde, die von der Erfassungseinheit (301) erfasst wurden, zu empfangen;
eine erste Sendeeinheit (303), die dazu ausgelegt ist, die ausgewählte Mobiltelefonnummer, die von der Eingabeeinheit (302) empfangen wurde, an den Server zu senden, um eine Mobiltelefonnummernregistrierung auszuführen; und
eine Bestätigungsempfangseinheit (304), die dazu ausgelegt ist, eine Mobiltelefonnummernregistrierungsbestätigungsnachricht, die vom Server zurückgegeben wurde, zu empfangen;
wobei:
die Eingabeeinheit (302) ferner dazu ausgelegt ist, ein Passwort, das vom Benutzer eingegeben wurde, zu empfangen; und
die erste Sendeeinheit (303) ferner dazu ausgelegt ist, das Passwort, das von der Eingabeeinheit (302) empfangen wurde, an den Server zu senden, um eine Bindung des Passworts an die Mobiltelefonnummer, die vom Benutzer ausgewählt wurde, auszuführen.

6. Kartenloses Mobiltelefon nach Anspruch 5, wobei:
die Erfassungseinheit (301) ferner dazu ausgelegt ist, auswählbare Dienstelemente vom Server herunterzuladen;
die Eingabeeinheit (302) ferner dazu ausgelegt ist, ein Dienstelement, das vom Benutzer ausgewählt wurde, zu empfangen;
die erste Sendeeinheit (303) ferner dazu ausgelegt ist, das Dienstelement, das vom Benutzer ausgewählt wurde, an den Server zu senden, um eine Dienstregistrierung auszuführen; und
die Bestätigungsempfangseinheit (304) ferner dazu ausgelegt ist, eine Dienstregistrierungsbestätigungsnachricht, die vom Server zurückgegeben wurde, zu empfangen.

7. Kartenloses Mobiltelefon nach Anspruch 6, das ferner Folgendes umfasst:
eine Mobiltelefonnummernladeeinheit (401), die zu Folgendem ausgelegt ist:
nachdem die Bestätigungsempfangseinheit (304) die Mobiltelefonnummernregistrierungsbestätigungsnachricht, die vom Server zurückgegeben wurde, empfangen hat, Laden der Mobiltelefonnummer, wenn das Mobiltelefon erneut gestartet wird; und
eine Betriebssteuereinheit (402), die zu Folgendem ausgelegt ist: wenn der Benutzer das Dienstelement, das vom Benutzer ausgewählt wurde, betreibt, Verwenden der Mobiltelefonnummer, um das Dienstelement, das vom Benutzer betrieben wird, auszuführen.

8. Kartenloses Mobiltelefon nach Anspruch 6 oder 7, wobei:
die Erfassungseinheit (301) speziell dazu ausgelegt ist, ein Anwendungsprogramm eines Clients vom Server herunterzuladen und die auswählbaren Dienstelemente unter Verwendung des Anwendungsprogramms des Clients herunterzuladen;
die Eingabeeinheit (302) ferner dazu ausgelegt ist, ein Dienstelement, das vom Benutzer in einer Auslegungsdatei des Clients eingestellt wurde, zu empfangen; und
die erste Sendeeinheit (303) ferner dazu ausgelegt ist, das Dienstelement, das in der Auslegungsdatei des Clients eingestellt ist und von der Eingabeeinheit (302) empfangen wurde, mit dem Server zu synchronisieren.

9. Kartenloses Mobiltelefon, das Folgendes umfasst:
einen Prozessor (702), einen Empfänger (703) und einen Sender (704);
wobei der Prozessor (702) dazu ausgelegt ist, unter Verwendung des Empfängers (703) eine Vielzahl von auswählbaren Mobiltelefonnummern von einem Server zu erfassen, um eine Mobiltelefonnummer, die von einem Benutzer aus der Vielzahl von auswählbaren Mobiltelefonnummern ausgewählt wurde, zu empfangen, und die ausgewählte Mobiltelefonnummer unter Verwendung des Senders (704) an den Server zu senden, um eine Mobiltelefonnummernregistrierung auszuführen, und eine Mobiltelefonnummernregistrierungsbestätigungsnachricht, die vom Server zurückgegeben wurde, unter Verwendung des Empfängers (703) zu empfangen;
wobei:
der Prozessor (702) ferner dazu ausgelegt ist, ein Passwort, das vom Benutzer eingegeben wurde, zu empfangen und das Passwort unter Verwendung des Senders (704) an den Server zu senden, um eine Bindung des Passworts an die Mobiltelefonnummer, die vom Benutzer ausgewählt wurde, auszuführen.

10. Kartenloses Mobiltelefon nach Anspruch 9, wobei:
der Prozessor (702) ferner dazu ausgelegt ist, die auswählbaren Dienstelemente unter Verwendung des Empfängers (703) vom Server herunterzuladen, um ein Dienstelement, das vom Benutzer ausgewählt wurde, zu empfangen und das Dienstelement, das vom Benutzer ausgewählt wurde, unter Verwendung des Senders (704) an den Server zu senden, um eine Dienstregistrierung auszuführen, und eine Dienstregistrierungsbestätigungsnachricht, die vom Server zurückgegeben wurde, unter Verwendung des Empfängers (703) zu empfangen.

11. Kartenloses Mobiltelefon nach Anspruch 10, wobei:
der Prozessor (702) ferner zu Folgendem ausgelegt ist: nachdem der Empfänger (703) die Mobiltelefonnummernregistrierungsbestätigungsnachricht, die vom Server zurückgegeben wurde, empfangen hat, Laden der Mobiltelefonnummer, wenn das Mobiltelefon erneut gestartet wird, und wenn der Benutzer das Dienstelement, das vom Benutzer ausgewählt wurde, betreibt, Verwenden der Mobiltelefonnummer, um das Dienstelement, das vom Benutzer betrieben wird, auszuwählen.

12. Kartenloses Mobiltelefon nach Anspruch 10 oder 11, wobei:
der Prozessor (702) speziell zu Folgendem ausgelegt ist: Herunterladen eines Anwendungsprogramms eines Clients vom Server unter Verwendung des Empfängers (703), Herunterladen der auswählbaren Dienstelemente unter Verwendung des Anwendungsprogramms des Clients, Empfangen eines Dienstelements, das vom Benutzer in einer Auslegungsdatei des Clients eingestellt wurde, und Synchronisieren des Dienstelements, das in der Auslegungsdatei des Clients eingestellt ist, mit dem Server unter Verwendung des Senders (704).

## Revendications

1. Procédé réalisé par un téléphone cellulaire sans carte pour mettre en oeuvre un téléphone cellulaire sans carte, consistant :
à acquérir (101) une pluralité de numéros de téléphone cellulaire sélectionnables à partir d'un serveur ;
à recevoir (102) un numéro de téléphone cellulaire sélectionné par un utilisateur parmi la pluralité de numéros de téléphone sélectionnables et à envoyer (102) le numéro de téléphone cellulaire sélectionné au serveur pour exécuter un enregistrement de numéro de téléphone cellulaire ; et
à recevoir (103) un message d'accusé de réception d'enregistrement de numéro de téléphone cellulaire renvoyé par le serveur ;
dans lequel le procédé consiste en outre :
à recevoir un mot de passe entré par l'utilisateur et à envoyer le mot de passe au serveur pour exécuter la liaison du mot de passe au numéro de téléphone cellulaire sélectionné par l'utilisateur.

2. Procédé selon la revendication 1, consistant en outre :
à télécharger des éléments de service sélectionnables à partir du serveur ;
à recevoir un élément de service sélectionné par l'utilisateur et à envoyer l'élément de service sélectionné par l'utilisateur au serveur pour exécuter un enregistrement de service ; et
à recevoir un message d'accusé de réception d'enregistrement de service renvoyé par le serveur.

3. Procédé selon la revendication 2, après la réception (103) d'un message d'accusé de réception d'enregistrement de numéro de téléphone cellulaire renvoyé par le serveur, consistant en outre :
à charger le numéro de téléphone cellulaire lorsque le téléphone cellulaire est à nouveau mis en marche ; et lorsque l'utilisateur exploite l'élément de service sélectionné par l'utilisateur, à utiliser le numéro de téléphone cellulaire pour exécuter l'élément de service exploité par l'utilisateur.

4. Procédé selon la revendication 2 ou 3, dans lequel le téléchargement d'éléments de service sélectionnables à partir du serveur consiste :
à télécharger un programme d'application d'un client à partir du serveur et à télécharger les éléments de service sélectionnables en utilisant le programme d'application du client ; et le procédé consiste en outre :
à recevoir un élément de service qui est défini dans un fichier de configuration du client par l'utilisateur, et à synchroniser l'élément de service qui est défini dans le fichier de configuration du client, avec le serveur.

5. Téléphone cellulaire sans carte comprenant :
une unité d'acquisition (301), configurée pour acquérir une pluralité de numéros de téléphone cellulaire sélectionnables à partir d'un serveur ;
une unité d'entrée (302), configurée pour recevoir un numéro de téléphone cellulaire sélectionné par un utilisateur parmi la pluralité de numéros de téléphone sélectionnables acquis par l'unité d'acquisition (301) ;
une première unité d'envoi (303), configurée pour envoyer le numéro de téléphone cellulaire sélectionné reçu par l'unité d'entrée (302) au serveur pour exécuter un enregistrement de numéro de téléphone cellulaire ; et
une unité de réception d'accusé de réception (304), configurée pour recevoir un message d'accusé de réception d'enregistrement de numéro de téléphone cellulaire renvoyé par le serveur ;
dans lequel
l'unité d'entrée (302) est en outre configurée pour recevoir un mot de passe entré par l'utilisateur ; et
la première unité d'envoi (303) est en outre configurée pour envoyer le mot de passe reçu par l'unité d'entrée (302) au serveur pour exécuter la liaison du mot de passe au numéro de téléphone cellulaire sélectionné par l'utilisateur.

6. Téléphone cellulaire sans carte selon la revendication 5, dans lequel :
l'unité d'acquisition (301) est en outre configurée pour télécharger des éléments de service sélectionnables à partir du serveur ;
l'unité d'entrée (302) est en outre configurée pour recevoir un élément de service sélectionné par l'utilisateur :
la première unité d'envoi (303) est en outre configurée pour envoyer l'élément de service sélectionné par l'utilisateur au serveur pour exécuter un enregistrement de service ; et
l'unité de réception d'accusé de réception (304) est en outre configurée pour recevoir un message d'accusé de réception d'enregistrement de service renvoyé par le serveur.

7. Téléphone cellulaire sans carte selon la revendication 6, comprenant en outre :
une unité de chargement de numéro de téléphone cellulaire (401), configurée : après que l'unité de réception d'accusé de réception (304) reçoit le message d'accusé de réception d'enregistrement de numéro de téléphone cellulaire renvoyé par le serveur, pour charger le numéro de téléphone cellulaire lorsque le téléphone cellulaire est à nouveau mis en marche ; et
une unité de commande de fonctionnement (402), configurée : lorsque l'utilisateur exploite l'élément de service sélectionné par l'utilisateur, pour utiliser le numéro de téléphone cellulaire pour exécuter l'élément de service exploité par l'utilisateur.

8. Téléphone cellulaire sans carte selon la revendication 6 ou 7, dans lequel :
l'unité d'acquisition (301) est spécialement configurée pour télécharger un programme d'application d'un client à partir du serveur et pour télécharger les éléments de service sélectionnables en utilisant le programme d'application du client ;
l'unité d'entrée (302) est en outre configurée pour recevoir un élément de service qui est défini dans un fichier de configuration du client par l'utilisateur ; et
la première unité d'envoi (303) est en outre configurée pour synchroniser l'élément de service qui est défini dans le fichier de configuration du client et reçu par l'unité d'entrée (302), avec le serveur.

9. Téléphone cellulaire sans carte comprenant : un processeur (702), un récepteur (703) et un émetteur (704) ;
le processeur (702) étant configuré pour acquérir une pluralité de numéros de téléphone cellulaire sélectionnables à partir d'un serveur en utilisant le récepteur (703), pour recevoir un numéro de téléphone cellulaire sélectionné par un utilisateur parmi la pluralité de numéros de téléphone sélectionnables et pour envoyer, en utilisant l'émetteur (704), le numéro de téléphone cellulaire sélectionné au serveur pour exécuter un enregistrement de numéro de téléphone cellulaire et pour recevoir, en utilisant le récepteur (703), un message d'accusé de réception d'enregistrement de numéro de téléphone cellulaire renvoyé par le serveur ;
dans lequel :
le processeur (702) est en outre configuré pour recevoir un mot de passe entré par l'utilisateur et pour envoyer, en utilisant l'émetteur (704), le mot de passe au serveur pour exécuter la liaison du mot de passe au numéro de téléphone cellulaire sélectionné par l'utilisateur.

10. Téléphone cellulaire sans carte selon la revendication 9, dans lequel :
le processeur (702) est en outre configuré pour télécharger des éléments de service sélectionnables à partir du serveur en utilisant le récepteur (703), pour recevoir un élément de service sélectionné par l'utilisateur et pour envoyer, en utilisant l'émetteur (704), l'élément de service sélectionné par l'utilisateur au serveur pour exécuter un enregistrement de service et pour recevoir, en utilisant le récepteur (703), un message d'accusé de réception d'enregistrement de service renvoyé par le serveur.

11. Téléphone cellulaire sans carte selon la revendication 10, dans lequel :
le processeur (702) est en outre configuré : après que le récepteur (703) reçoit le message d'accusé de réception d'enregistrement de numéro de téléphone cellulaire renvoyé par le serveur, pour charger le numéro de téléphone cellulaire lorsque le téléphone cellulaire est à nouveau mis en marche et, lorsque l'utilisateur exploite l'élément de service sélectionné par l'utilisateur, pour utiliser le numéro de téléphone cellulaire pour exécuter l'élément de service exploité par l'utilisateur.

12. Téléphone cellulaire sans carte selon la revendication 10 ou 11, dans lequel :
le processeur (702) est spécialement configuré : pour télécharger un programme d'application d'un client à partir du serveur en utilisant le récepteur (703), pour télécharger les éléments de service sélectionnables en utilisant le programme d'application du client, pour recevoir un élément de service qui est défini dans un fichier de configuration du client par l'utilisateur, et pour synchroniser, en utilisant l'émetteur (704), l'élément de service qui est défini dans le fichier de configuration du client, avec le serveur.
